# FASCICULE DE BREVET EUROPEEN

(11) **EP 3 953 568 B1**
(45) Date de publication et mention de la délivrance du brevet: **22.02.2023**
(21) Numéro de dépôt: 20714645.7
(22) Date de dépôt: 03.04.2020
(51) Int. Cl.: F01D 1/26, F01D 5/03, F01D 5/26, F01D 5/30, F02C 3/067

(54) **TURBINE CONTRAROTATIVE DE TURBOMACHINE ET PROCÉDÉ D'ASSEMBLAGE D'UN AUBAGE MOBILE EXTERNE D'UNE TURBINE CONTRAROTATIVE**
GEGENLÄUFIGE TURBINE EINER TURBOMASCHINE UND VERFAHREN ZUR MONTAGE EINER ÄUSSEREN LAUFENDEN BESCHAUFELUNG EINER GEGENLÄUFIGEN TURBINE
COUNTER-ROTATING TURBINE OF A TURBOMACHINE AND METHOD OF ASSEMBLING AN EXTERNAL MOBILE BLADING OF A COUNTER-ROTATING TURBINE

(30) Priorité: 08.04.2019 FR 1903741
(43) Date de publication de la demande: 16.02.2022
(73) Titulaire: SAFRAN AIRCRAFT ENGINES, 75015 Paris (FR)
(72) Inventeur: SULTANA, Patrick, Jean, Laurent, 77550 MOISSY-CRAMAYEL (FR); COIFFIER, Clément, Charles, Jérémy, 77550 MOISSY-CRAMAYEL (FR); RENON, Olivier, 77550 MOISSY-CRAMAYEL (FR); ZAMAI, Laurent, Cédric, 77550 MOISSY-CRAMAYEL (FR)
(74) Mandataire: Cabinet Beau de Loménie
(86) Numéro de dépôt international: PCT/EP2020/059506
(87) Numéro de publication internationale: WO 2020/207909

(56) Documents cités:
- FR-A1- 3 039 218
- US-A- 2 755 064
- US-A- 5 307 622

## Description

### Domaine Technique

Le présent exposé concerne le domaine des turbomachines. Plus précisément, le présent exposé concerne le domaine des turbines contrarotatives de turbomachine, et notamment un dispositif de fixation des aubes de rotor d'une telle turbine, et un procédé d'assemblage des aubes de rotor d'une telle turbine.

L'invention concerne une turbine contrarotative de turbomachine et un procédé d'assemblage d'un aubage mobile externe d'une turbine contrarotative.

### Technique antérieure

Une turbomachine d'aéronef comprend généralement, d'amont en aval dans le sens d'écoulement des gaz, une soufflante, un compresseur basse pression, un compresseur haute pression, une chambre de combustion, une turbine haute pression et une turbine basse pression. Le rotor du compresseur basse pression est entraîné par le rotor de la turbine basse pression, et le rotor du compresseur haute pression est entraîné par le rotor de la turbine haute pression.

De manière connue, les aubes de rotor de turbine basse pression présentent une base en forme de queue d'aronde, par exemple, et sont fixées dans les alvéoles d'un disque de rotor, les alvéoles étant généralement usinées par brochage. La liaison entre les aubes et le disque travaille ainsi en traction lors du fonctionnement de la turbine, du fait des forces centrifuges.

Afin d'améliorer le rendement du moteur, les turbomachines d'aéronef peuvent être équipées d'une turbine contrarotative, à la place de la turbine basse pression. La turbine contrarotative comprend un rotor interne, dit rotor rapide, relié à un premier arbre de turbine, et configuré pour tourner dans un premier sens de rotation, et un rotor externe, dit rotor lent, relié à un second arbre de turbine, et configuré pour tourner dans un deuxième sens de rotation, opposé au premier sens de rotation. Les aubes du premier rotor sont intercalées avec les aubes du deuxième rotor. FR 3 039 218 A1 et US 5 307 622 A décrivent des exemples de turbine contrarotative.

L'architecture du rotor externe de la turbine contrarotative diffère de celle des rotors de turbine habituels, en ce que les aubes du rotor externe ne sont pas fixées sur un disque, mais sont fixées sur un carter de rotor externe, ou tambour externe, et s'étendent de leur point de fixation sur le carter de rotor externe, vers l'intérieur de la turbine. Par conséquent, la liaison entre les aubes et le carter de rotor externe travaille ainsi en compression lors du fonctionnement de la turbine, du fait des forces centrifuges. Les liaisons mentionnées ci-dessus, généralement utilisées sur les turbines basses pressions simples, c'est-à-dire non contrarotatives, ne présentent pas une rigidité suffisante, et ne sont plus adaptées pour les architectures travaillant en compression, notamment sur les rotors externes de turbines contrarotatives. En effet, des mouvements d'oscillation de l'aube par rapport à la direction radiale, ou des mouvements de rotation autour de cet axe, peuvent se produire lorsque l'attache entre l'aube et le carter travaille en compression.

Il existe donc un besoin pour pallier les inconvénients mentionnés ci-dessus.

### Exposé de l'invention

Le présent exposé concerne une turbine contrarotative de turbomachine s'étendant autour d'un axe et comprenant :
- un rotor interne configuré pour tourner autour de l'axe de rotation, et comprenant un tambour interne sur lequel est fixé un aubage mobile interne ayant au moins une aube mobile interne s'étendant radialement vers l'extérieur,
- un rotor externe configuré pour tourner autour de l'axe de rotation dans un sens opposé au rotor interne, et comprenant un tambour externe sur lequel est fixé un aubage mobile externe ayant au moins une aube mobile externe s'étendant radialement vers l'intérieur,
l'aubage mobile externe comprenant au moins une tige de fixation s'étendant à travers un orifice du tambour externe, l'aubage mobile externe étant fixé au tambour externe par l'intermédiaire d'un moyen de serrage fixé à la tige de fixation depuis une face externe du tambour externe, une bague de calage étant disposée autour de la tige de fixation dans l'orifice du tambour externe.

Dans le présent exposé, l'aubage mobile externe peut être une aube mobile externe seule ou un secteur comprenant plusieurs aubes. La suite de la description fait référence à une aube mobile externe. Les termes « interne » et « externe », et les termes « intérieur » et « extérieur » et leurs dérivés sont considérés selon la direction radiale de la turbine. Par exemple, le terme « vers l'extérieur » définit un sens allant du centre de la turbine vers l'extérieur de la turbine dans la direction radiale. Par conséquent, les aubes mobiles internes comprennent un pied fixé au tambour interne, et s'étendent depuis ce pied, vers l'extérieur, jusqu'à une extrémité libre opposée à l'extrémité fixée au tambour interne.

De même, les aubes mobiles externes comprennent un pied, ou une base fixée au tambour externe, et s'étendent depuis cette base, vers l'intérieur, jusqu'à une extrémité libre opposée à l'extrémité fixée au tambour externe.

Le tambour externe est ainsi disposé autour du tambour interne, et tourne dans un sens opposé au tambour interne. Lors du fonctionnement de la turbine, lorsque le tambour externe tourne à grande vitesse, les forces centrifuges tendent à écraser les aubes mobiles externes contre le tambour externe, sur lequel elles sont fixées. L'attache entre les aubes mobiles externes et ledit tambour externe travaille donc en compression.

L'aube mobile externe est fixée au tambour mobile externe en faisant passer la tige de fixation à travers un orifice dudit tambour, et en serrant l'ensemble par l'intermédiaire du moyen de serrage fixé à la tige de fixation du côté externe du tambour externe, plaquant ainsi l'aube mobile externe contre la face interne dudit tambour.

Ce mode de fixation présente l'avantage d'améliorer la rigidité de la fixation de l'aube sur le tambour externe par rapport aux fixations connues d'aubes, présentant par exemple un pied en forme de queue d'aronde inséré dans une alvéole d'un disque. Le mode de fixation du présent exposé permet notamment de limiter les mouvements d'oscillation de l'aube par rapport à la direction radiale, ou les mouvements de rotation autour de cet axe, lorsque l'attache entre l'aube et le tambour travaille en compression. Il est ainsi possible d'augmenter la fréquence des modes propres des aubes ou des secteurs d'aubes et d'éviter ainsi les plages de vibrations du moteur en fonctionnement.

En outre, la présence de la bague de calage permet d'améliorer le calage, en d'autres termes le maintien de la tige de fixation dans l'orifice du tambour mobile externe. La bague permet ainsi, en comblant par exemple un jeu existant entre la tige et la paroi interne de l'orifice, d'améliorer encore la rigidité globale de la fixation de l'aube mobile sur le tambour externe, travaillant en compression. Par ailleurs, la tige de fixation et le tambour externe peuvent être en métal. La bague permet donc également de limiter les transferts de métal entre la tige de fixation et le tambour externe, limitant ainsi l'usure de contact entre ces deux éléments.

Dans certains modes de réalisation, la bague de calage s'étend le long de la tige de fixation à l'intérieur de l'orifice du tambour externe, entre une base de l'aubage mobile externe et le moyen de serrage.

Dans certains modes de réalisation, la bague de calage s'étend le long de la tige de fixation sur au moins un tiers de la longueur de la tige de fixation, de préférence sur au moins la moitié de ladite longueur.

La bague peut ainsi présenter la forme d'un cylindre disposé autour de la tige de fixation, et s'étendant sur au moins un tiers, de préférence au moins la moitié de la longueur de la tige de fixation. Cela permet d'optimiser le calage de l'aube mobile externe, et ainsi d'améliorer la rigidité de la fixation de la tige au tambour externe.

Dans certains modes de réalisation, la turbine comprend un anneau d'étanchéité fixé sur une face interne du tambour externe, l'anneau d'étanchéité comprenant au moins un plot anti-rotation, le plot anti-rotation étant engagé dans une encoche de l'aubage mobile externe.

L'anneau d'étanchéité présente de préférence une forme annulaire ou tronconique, similaire à la forme du tambour externe, et est fixé à l'intérieur dudit tambour externe, sur une face interne de celui-ci.

L'au moins un plot anti-rotation peut être disposé à une même position circonférentielle que l'orifice du carter.

On comprend par position circonférentielle, la position du plot autour de l'axe de rotation de la turbomachine à une position donnée le long dudit axe. Par conséquent, par « disposé à une même position circonférentielle que l'orifice du tambour externe », on comprend que le plot et l'axe central de l'orifice sont disposés dans un même plan, ledit plan étant parallèle à l'axe de la turbomachine et comprenant cet axe. Autrement dit, un plan médian du plot parallèle à l'axe de la turbomachine comprend l'axe central de l'orifice.

Par conséquent, lorsque l'aube mobile externe est fixée au tambour externe en faisant passer la tige de fixation dans l'orifice du tambour externe, le plot anti-rotation peut être engagé dans l'encoche de l'aube. Les mouvements de l'aube autour de son axe principal, c'est-à-dire autour d'un axe radial, sont ainsi limités. Par ailleurs, les mouvements de rotation de l'anneau d'étanchéité peuvent également être limités.

Dans certains modes de réalisation, une lamelle de jonction comprenant au moins un orifice coaxial avec l'orifice du tambour externe est intercalée entre la face interne du tambour externe et l'aubage mobile externe.

En d'autres termes, la tige de fixation est engagée à la fois dans l'orifice de la lamelle et dans l'orifice du tambour externe, la lamelle étant alors prise en sandwich entre l'aube et le tambour externe. La lamelle de jonction permet de limiter les transferts de métal entre l'aube et le tambour, entrainant une usure de contact entre ces deux pièces. La lamelle permet ainsi de limiter l'usure de ces pièces, et d'accroitre leur durée de vie. De préférence, la lamelle de jonction comprend une pluralité d'orifices, chaque orifice étant coaxial avec un orifice du tambour.

Dans certains modes de réalisation, la tige de fixation s'étend radialement depuis la base et la base comprend l'encoche.

La tige de fixation et l'aube, notamment la base, peuvent être une pièce unique, en étant réalisées par exemple à partir d'une même coulée de métal.

Dans certains modes de réalisation, la turbine comprend un moyen d'amortissement configuré pour être inséré dans une cavité formée entre les bases de deux aubes adjacentes.

La base peut comprendre par exemple deux parois latérales parallèles et espacées l'une de l'autre, une extrémité des deux parois formant l'encoche. Une cavité est formée entre deux parois latérales des bases de deux aubes adjacentes. La tige de fixation s'étend radialement à l'extérieur de la base. Le moyen d'amortissement peut alors être disposé dans la cavité, en l'insérant dans cette cavité. L'amortisseur peut être un morceau de tôle pliée ou emboutie, ou une pièce imprimée 3D, par exemple. Il peut être disposé dans la cavité entre les deux parois latérales d'une ou plusieurs aubes et permet l'étanchéité entre les deux parois latérales et également, par frottement et déformation, d'amortir les mouvements de ces deux parois.

Le présent exposé concerne également une turbomachine comprenant la turbine contrarotative selon l'un quelconque des modes de réalisation précédents.

Le présent exposé concerne également un procédé d'assemblage d'un aubage mobile externe d'une turbine contrarotative selon l'un quelconque des modes de réalisation précédents, comprenant :
- l'insertion d'une tige de fixation de l'aubage mobile externe dans un orifice du tambour externe du rotor externe de la turbine,
- l'insertion de la bague de calage autour de la tige de fixation, dans l'orifice et
- la fixation de l'aubage mobile externe au tambour externe par l'intermédiaire d'un moyen de serrage fixé à la tige de fixation depuis une face externe du tambour externe.

Dans certains modes de réalisation, avant l'étape d'insertion de la tige de fixation, un anneau d'étanchéité, comprenant au moins un plot anti-rotation, est fixé sur une face interne du tambour externe, de préférence de manière à ce que le plot soit disposé à une même position circonférentielle qu'un orifice du tambour, le plot anti-rotation étant engagé dans une encoche de l'aubage mobile externe lors de l'étape d'insertion de la tige de fixation dans l'orifice dudit tambour externe.

Dans certains modes de réalisation, avant l'étape de fixation du moyen de fixation sur la tige, une rondelle d'étanchéité est installée de manière à être intercalée entre la bague de calage et le moyen de fixation.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue générale illustrant le principe de fonctionnement d'une turbomachine à soufflantes contrarotatives,
[Fig. 2] La figure 2 représente une vue éclatée en perspective d'une attache entre une aube mobile externe et un tambour mobile de rotor externe d'une turbine contrarotative selon un premier mode de réalisation,
[Fig. 3] La figure 3 représente une vue en perspective d'une première étape d'un procédé d'assemblage d'une aube mobile externe d'une turbine contrarotative,
[Fig. 4] La figure 4 représente une vue en perspective d'une deuxième étape d'un procédé d'assemblage d'une aube mobile externe d'une turbine contrarotative,
[Fig. 5A-5C] Les figures 5A, 5B et 5C représentent des vues en perspective d'une troisième étape d'un procédé d'assemblage d'une aube mobile externe d'une turbine contrarotative,
[Fig. 6A-6B] Les figures 6A et 6B représentent des vues en perspective d'une quatrième étape d'un procédé d'assemblage d'une aube mobile externe d'une turbine contrarotative,
[Fig. 7A-7B] Les figures 7A et 7B représentent des vues en perspective d'une cinquième étape d'un procédé d'assemblage d'une aube mobile externe d'une turbine contrarotative,
[Fig. 8A-8B] Les figures 8A et 8B représentent des vues en perspective d'une sixième étape d'un procédé d'assemblage d'une aube mobile externe d'une turbine contrarotative,
[Fig. 9] La figure 9 représente une vue en perspective de l'attache de la figure 2 selon un exemple modifié du premier mode de réalisation,
[Fig. 10A-10B] Les figures 10A et 10B représentent une vue en perspective d'un secteur d'aubes mobiles externes d'une turbine contrarotative selon un deuxième mode de réalisation,
[Fig. 11] La figure 11 représente schématiquement les étapes d'un procédé d'assemblage selon le présent exposé.

### Description des modes de réalisation

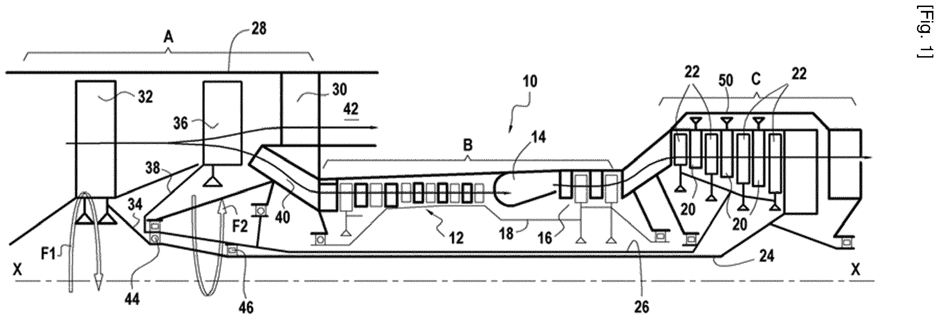

En référence à la figure 1, une turbomachine 10 à soufflantes contrarotatives comporte un axe longitudinal X-X. D'amont en aval selon le sens d'écoulement des gaz dans la turbomachine (représenté par la flèche noire), la turbomachine 10 comprend essentiellement trois parties: un module amont A (ou section de soufflante), un module intermédiaire B (ou corps haute-pression) et un module aval C (ou section de turbine basse pression).

Les trois parties A, B et C de la turbomachine sont modulaires, c'est-à-dire qu'elles forment chacune un seul ensemble et peuvent être remplacées chacune en étant séparées des autres parties de la turbomachine.

De façon bien connue en soi, le corps haute-pression B comprend un générateur de gaz pour produire des gaz de combustion. Ce générateur de gaz comprend un compresseur 12, une chambre de combustion 14 et une turbine haute-pression 16.

L'air comprimé par le compresseur 12 est mélangé au carburant dans la chambre de combustion 14 avant d'y être brûlé. Les gaz de combustion ainsi produits entraînent les aubes mobiles de la turbine haute-pression 16 qui elle-même entraîne le compresseur 12 par l'intermédiaire d'un arbre haute-pression 18. La circulation des gaz de combustion dans la turbomachine 10 se fait axialement d'amont en aval.

La section de turbine basse-pression C comprend un premier rotor annulaire, ou rotor externe. Ce premier rotor comprend une rangée d'aubes mobiles externes de turbine 20 qui s'étendent radialement vers l'intérieur et qui sont espacées axialement les unes des autres.

La section de turbine basse-pression C comprend également un second rotor annulaire, ou rotor interne. Ce second rotor comprend une rangée d'aubes mobiles internes de turbine 22 qui s'étendent radialement vers l'extérieur et qui sont espacées axialement les unes des autres. Les aubes de turbine 20, 22 des premier et second rotors sont disposées en alternance les unes par rapport aux autres de sorte que le premier et le second rotors sont imbriqués l'un dans l'autre.

Les aubes mobiles de turbine 20 du premier rotor sont supportées en rotation par un premier arbre basse-pression 24. De même, les aubes mobiles de turbine 22 du second rotor sont supportées en rotation par un second arbre basse-pression 26 disposé de façon coaxiale autour du premier arbre 24. Les arbres basse-pression 24, 26 s'étendent axialement de l'amont vers l'aval de la turbomachine.

La section de turbine basse-pression C est traversée par les gaz de combustion provenant du corps haute-pression B. Ces gaz de combustion entraînent donc en rotation les aubes de turbine 20, 22 des premier et second rotors dans des sens opposés. Ainsi, les premier et second arbres basse-pression 24, 26 tournent également de façon contrarotative.

La section de soufflante A est située à l'amont de la turbomachine 10. Un capot 28 entoure de façon annulaire cette section de soufflante A. Le capot 28 est supporté par des entretoises 30 qui s'étendent radialement vers l'intérieur de la turbomachine.

La section de soufflante A comporte une première rangée d'aubes de soufflante 32 montées sur un arbre de soufflante amont 34 qui est relié à une extrémité amont du premier arbre basse-pression 24.

La section de soufflante A comporte également une seconde rangée d'aubes de soufflante 36 qui sont espacées axialement vers l'aval de la première rangée d'aubes de soufflante 32 et montées sur un arbre de soufflante arrière 38 relié à une extrémité amont du second arbre basse-pression 26.

Les première et seconde rangées d'aubes de soufflante 32, 36 tournent ainsi dans des directions opposées qui sont représentées, à titre d'exemple, par les flèches respectives F1 et F2. Cette configuration à soufflantes contrarotatives confère ainsi à la turbomachine un rendement élevé pour une consommation spécifique relativement faible.

Les aubes de soufflante 32, 36 s'étendent radialement depuis les arbres de soufflante amont 34 et aval 38 pratiquement jusqu'au capot 28. Elles sont disposées dans le passage de circulation de l'air alimentant à la fois la veine primaire 40 conduisant au compresseur 12 du corps haute pression B et la veine secondaire 42 de contournement.

Au niveau de son extrémité amont, le premier arbre basse-pression 24 supporte en rotation le second arbre basse-pression 26 par l'intermédiaire d'un premier palier à roulement 44 et d'un second palier à roulement 46 disposé en aval du premier.

Le premier palier à roulement 44 est du type à billes pour tenir aux charges axiales, tandis que le second palier à roulement 46 est du type à rouleaux pour tenir aux charges radiales de la turbomachine.

Les aubes mobiles internes 22 comprennent un pied fixé à un disque, et s'étendent radialement vers l'extérieur depuis ce pied jusqu'à une extrémité radialement externe. Ainsi, lorsque le second rotor tourne autour de l'arbre 26, les aubes 22 exercent sur l'attache entre le disque et le pied, une force dirigée vers l'extérieur, due aux forces centrifuge. L'attache entre le disque et le pied des aubes 22 est donc soumise à des efforts de traction.

Les aubes mobiles externes 20 comprennent une portion externe fixée à un tambour externe 50, et s'étendent radialement vers l'intérieur depuis cette base jusqu'à une extrémité radialement interne. Ainsi, lorsque le premier rotor tourne autour de l'arbre 24, les aubes 20 exercent sur l'attache entre le tambour 50 et la base de l'aube 20, une force dirigée vers l'extérieur, due aux forces centrifuge. L'attache entre le tambour 50 et la base des aubes 20 est donc soumise à des efforts de compression.

La suite de la description décrit un mode de fixation et un procédé de fixation d'aubes mobiles externes 20, en référence à la turbine basse pression C de la turbomachine 10. Néanmoins, ce mode de fixation ne se limite pas à cette turbine basse pression, et peut s'adapter à d'autres éléments de la turbomachine, par exemple la turbine haute pression.

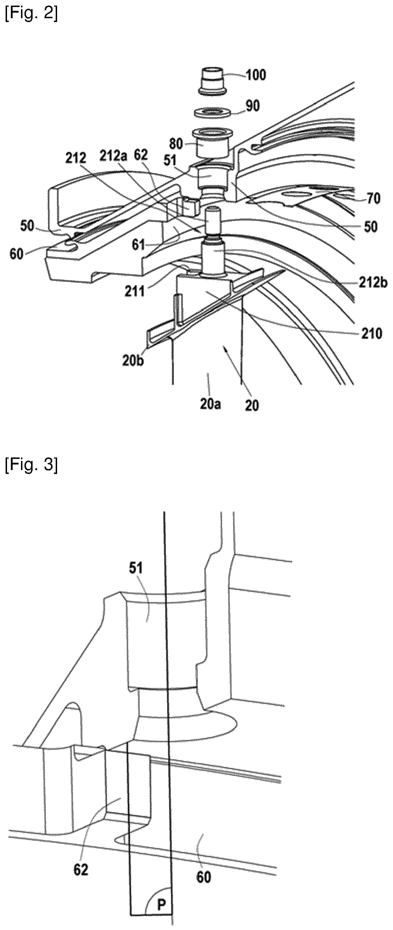

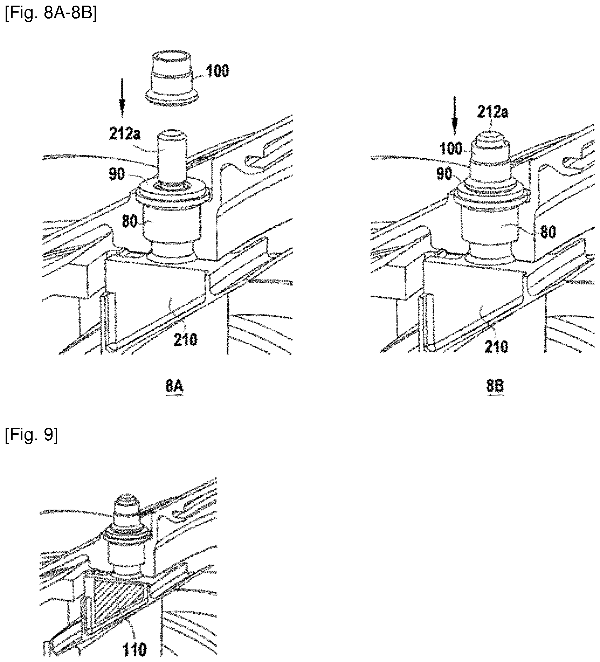

La figure 2 représente une vue éclatée en perspective d'une attache entre une aube mobile externe 20 et le tambour mobile de rotor externe 50 de la turbine contrarotative, et la figure 8B représente l'attache de la figure 2 lorsque l'aube mobile 20 et le tambour mobile 50 sont assemblés et fixés entre eux.

Par ailleurs, les termes « interne » ou « externe » et leurs dérivés font référence à la direction radiale de la turbine.

Le tambour externe 50 comprend une pluralité d'orifices 51, ou trous traversant, régulièrement répartis circonférentiellement autour de l'axe X-X, chaque orifice 51 correspondant à une aube mobile 20.

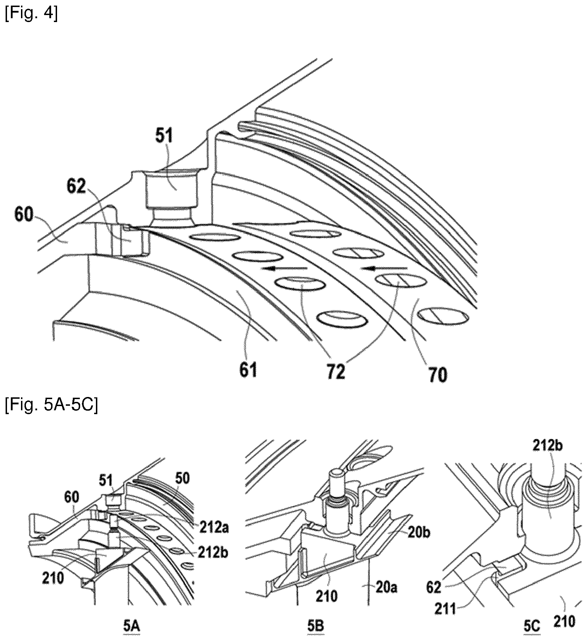

Un anneau d'étanchéité 60 est fixé sur une face interne du tambour 50, et permet d'assurer l'étanchéité entre la partie amont et aval de la roue mobile interne de la turbine. Différents modes de fixation sont envisageables pour fixer l'anneau sur la face interne du tambour externe. Le positionnement du plot anti-rotation dans l'encoche de l'aube peut permettre notamment de retenir la rotation de l'anneau d'étanchéité. L'anneau d'étanchéité peut comprendre une partie externe fixée au tambour, et une partie interne permettant d'assurer l'étanchéité. La partie interne peut être une partie abradable, comprenant un matériau métallique résistant au chaud, et en forme de nid d'abeille, par exemple. Une extrémité axiale 61, selon l'axe X-X, de l'anneau 60 est disposée à proximité, à environ 1cm par exemple, des orifices 51 du tambour 50 (voir figure 4). L'anneau d'étanchéité 60 d'étanchéité peut être annulaire ou comprendre une pluralité de secteurs d'anneau disposés circonférentiellement bouts-à-bouts. L'anneau d'étanchéité 60 d'étanchéité comprend une pluralité de saillies 62, par exemple des tenons, ou plots de positionnement de forme parallélépipédique, s'étendant axialement, selon l'axe X-X, depuis l'extrémité axiale 61 de l'anneau d'étanchéité 60, et répartis circonférentiellement, de préférence régulièrement autour de l'axe X-X. De préférence, L'anneau d'étanchéité 60 peut comprendre autant de plots de positionnement 62 que le tambour 50 ne comprend d'orifices 51. De plus, chaque plot anti-rotation 62 peut être disposé, par exemple, à une même position, selon la direction circonférentielle, qu'un orifice 51 du tambour 50.

L'aube mobile 20 (une seule est représentée) comprend une portion interne 20a qui est disposée dans la veine primaire 40, et une portion externe, ou portion de fixation, qui est disposée hors de ladite veine. Les portions externes et internes sont séparées par une plateforme 20b, délimitant la veine d'air. La portion externe, ou portion de fixation comprend une base 210, ou pied, de préférence creuse, présentant une rainure 211, ou encoche, sur une face de la base 210.

Une tige de fixation 212 s'étend depuis la base 210, plus précisément depuis une paroi externe de la base 210, dans la direction radiale, c'est-à-dire selon la longueur de l'aube 20. Cette tige 212 comprend un filetage sur au moins une portion 212a de celle-ci, une portion 212b de la tige ne comprenant alors pas de filetage. La tige 212 est configurée pour, lors de la fixation de l'aube 20 au tambour 50, passer à travers un orifice 51 du tambour 50, et est suffisamment longue pour traverser complètement cet orifice, de manière à ce que la portion filetée 212a ressorte du côté opposé de l'orifice 51, sur la face externe du tambour 50.

Dans ce cas, la paroi externe de la base 210 vient en butée contre la face interne du tambour 50. Dans cette position, le plot anti-rotation 62 est positionné dans la rainure 211 de la base 210. Le plot anti-rotation 62 ainsi positionné dans la rainure 211 permet de caler angulairement l'aube 20 et de bloquer les rotations de celle-ci autour de son axe.

Un clinquant 70, sous la forme d'une fine lamelle métallique annulaire et présentant une pluralité d'orifices 72 disposés chacun coaxialement au droit d'un orifice 51 du tambour 50, est disposé et pris en sandwich entre la portion externe de la base 210 et la face interne du tambour 50, lorsque l'aube 20 est fixée et serrée au tambour mobile 50. Le clinquant 70 comporte un alliage pouvant résister à la chaleur, par exemple de l'inconel^{®} ou du waspaloy^{®}. Le clinquant 70 peut être formé en une seule pièce en contact avec la face interne du tambour 50 sur toute sa circonférence, ou comprendre plusieurs secteurs. Le clinquant 70 permet d'éviter les transferts de métal entrainant une usure de contact entre ces deux pièces, dit phénomène de « fretting » en anglais.

Une bague 80 est disposée autour de la tige 212 et dans l'orifice 51 du tambour 50. Plus précisément, la bague 80 peut comporter une portion externe sous la forme d'une collerette 82 prenant appui sur la face externe du tambour mobile 50, et une portion interne sous la forme d'un cylindre 81 s'étendant à l'intérieur d'un orifice 51 du tambour 50 sur au moins une portion de la longueur de la tige de fixation 212, par exemple un tiers de la longueur de ladite tige. La bague peut être en métal, et peut comporter notamment un alliage pouvant résister à la chaleur, par exemple de l'inconel^{®} ou du waspaloy^{®}. La bague 80, plus précisément la partie interne 81, permet de combler l'espace annulaire S existant entre la tige de fixation 212 et la face interne de l'orifice 51 du tambour 50. De la même manière que le clinquant 70, la bague 80 permet de limiter les transferts de métal entre la tige de fixation 212 et le tambour 50, limitant ainsi l'usure de contact entre ces deux éléments. La bague 80 contribue en outre à améliorer le calage de l'aube 20 lorsque celle-ci est fixée au tambour 50, et également d'améliorer la rigidité de l'assemblage.

La portion filetée 212a de la tige de fixation 212 fait alors saillie à l'extérieur du tambour mobile 50, hors de l'orifice 51 du tambour 50. Un écrou 100 est vissé sur la portion filetée 212a de la tige de fixation 212, depuis la face externe du tambour 50, et permet de serrer l'aube mobile 20, en particulier la paroi externe de la base 210 de l'aube, contre la face interne du tambour 50. Une rondelle 90 peut en outre être disposée et être serrée entre l'écrou 100 et la collerette 82 de la bague 80, permettant notamment d'éviter l'endommagement de la bague 80 lorsque l'écrou 100 est serré sur la tige 212. Elle permet en outre d'améliorer l'étanchéité entre la bague 80 et l'écrou 100.

Comme illustré sur la figure 9, un amortisseur 110 peut être disposé à l'intérieur d'une cavité formée entre les parois latérales des bases 210 de deux aube 20 (une seule étant représentée sur la figure 9).

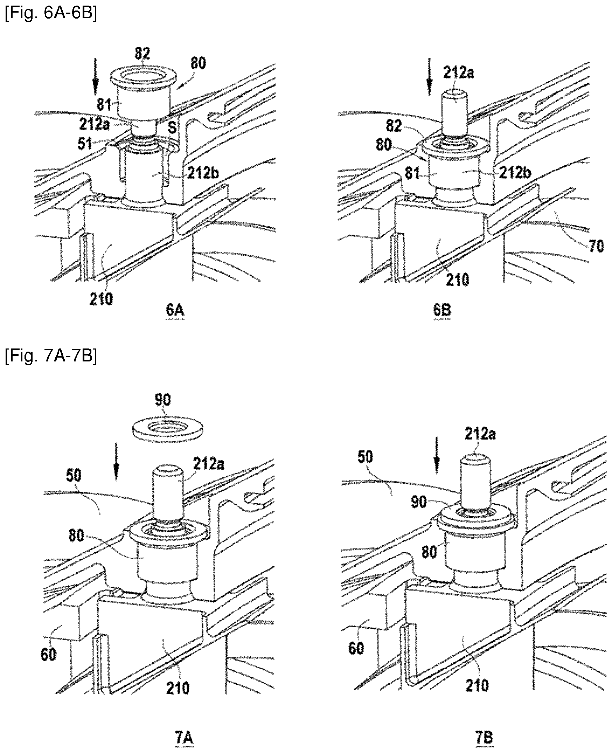

La suite de la description présente un procédé d'assemblage d'une aube mobile externe 20 d'une turbine contrarotative, en référence aux figures 3 à 8B, et 11.

L'anneau d'étanchéité 60 est d'abord fixé sur la face interne du tambour 50 de rotor externe, par exemple de manière à ce qu'un plan milieu P de chaque plot anti-rotation 62 se trouve aligné avec l'axe d'un orifice 51 du tambour (étape S1). Le plan médian P d'un plot 62 est un plan défini par la direction axiale et une direction radiale de la turbine, et passant par un centre dudit plot 62.

Le clinquant 70 est ensuite disposé contre la face interne du tambour 50 de rotor externe, de manière à ce que chaque orifice 72 du clinquant 70 soit coaxialement disposé au droit d'un orifice 51 du tambour (étape S2). Le clinquant 70 peut être glissé axialement dans un interstice entre les plots de positionnement 62 et la face interne du rotor 50.

Une aube mobile 20 est ensuite disposée sur le tambour 50, en insérant la tige de fixation 212 dans un orifice 51 du tambour 50, tout en orientant l'aube 20 de manière à ce que le plot anti-rotation 62 de l'anneau d'étanchéité 60 vienne s'insérer dans l'encoche 211 formée dans la base 210 de l'aube (étape S3). Dans cette position, une portion filetée 212a de la tige de fixation 212 dépasse de l'orifice 51 du tambour 50, depuis la face externe dudit tambour 50.

La bague 80 est disposée autour de la portion filetée 212a de la tige de fixation 212 depuis l'extérieur du tambour 50, et disposée à l'intérieur de l'orifice 51 du tambour 50, jusqu'à ce que la collerette 82 de la bague vienne en butée contre la face externe du tambour (étape S4). De manière alternative, la bague 80 peut être disposée à l'intérieur de l'orifice 51, avant l'insertion de la tige de fixation 212 dans l'orifice 51. En d'autres termes, l'étape S4 peut être réalisée avant l'étape S3.

La rondelle 90 peut également être disposée autour de la portion filetée 212a de la tige de fixation 212 et sur la collerette 82 de la bague 80, depuis l'extérieur du tambour (étape S5). On notera que la présence d'une rondelle, et donc l'étape S5, ne sont pas obligatoires. L'écrou 100 est alors vissé sur la portion filetée 212a de la tige de fixation 212 jusqu'à la rondelle 90, de manière à fixer l'ensemble, et en particulier serrer l'aube mobile 20 contre la face interne du tambour (étape S6), le clinquant 70 étant alors pris en sandwich entre l'aube 20 et ladite face interne du tambour 50.

Les étapes S3 à S6 décrites ci-dessus sont répétées pour toutes les aubes 20 du rotor externe.

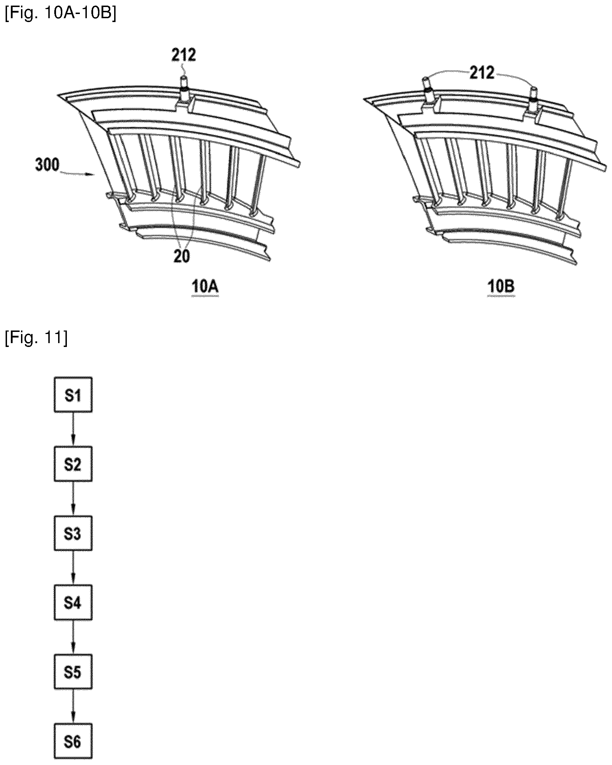

Selon un autre mode de réalisation du présent exposé, présenté en référence à la figure 10, le dispositif d'attache et le procédé de fixation décrit ci-dessus s'applique non pas à une aube mobile du rotor externe, mais à un secteur 300 d'aubes mobiles. En particulier, une seule tige de fixation 212, ou davantage, peut être fournie sur un secteur 300 d'aubes comprenant une pluralité d'aubes 20, par exemple six aubes 20. La caractéristiques du dispositif et du procédé de fixation décrits ci-dessus restent cependant les mêmes dans ce cas. En particulier, la (ou les) tige(s) de fixation 212 du secteur 300 d'aubes est insérée dans un orifice 51 du tambour 50 de rotor externe, et le dispositif d'attache comprend également un clinquant 70, une bague 80, une rondelle 90 et un écrou 100. Le fait de disposer d'une tige de fixation 212 pour plusieurs aubes permet de simplifier le processus de montage, et d'optimiser le temps de montage, le nombre d'itérations des étapes S3 et S6 étant plus faible que dans le premier mode de réalisation. Ce mode de réalisation permet en outre de limiter le nombre de pièces de fixation telles que des tiges ou des écrous, permettant ainsi un gain en masse, et permet également d'obtenir des secteurs d'aubes plus raides que des aubes unitaires.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Turbine contrarotative (C) de turbomachine (10) s'étendant autour d'un axe (X) et comprenant :
- un rotor interne configuré pour tourner autour de l'axe de rotation (X), et comprenant un tambour interne sur lequel est fixé un aubage mobile interne (22) ayant au moins une aube mobile interne s'étendant radialement vers l'extérieur,
- un rotor externe configuré pour tourner autour de l'axe de rotation (X) dans un sens opposé au rotor interne, et comprenant un tambour externe (50) sur lequel est fixé un aubage mobile externe (20) ayant au moins une aube mobile externe s'étendant radialement vers l'intérieur,
**caractérisée en ce que** l'aubage mobile externe (20) comprend au moins une tige de fixation (212) s'étendant à travers un orifice (51) du tambour externe (50), que l'aubage mobile externe (20) est fixé au tambour externe (50) par l'intermédiaire d'un moyen de serrage (100) fixé à la tige de fixation (212) depuis une face externe du tambour externe (50), et qu'une bague de calage (80) est disposée autour de la tige de fixation (50) dans l'orifice (51) du tambour externe (50).

2. Turbine (C) selon la revendication 1, dans laquelle la bague de calage (80) s'étend le long de la tige de fixation (212) à l'intérieur de l'orifice (51) du tambour externe (50), entre une base (210) de l'aubage mobile externe (20) et le moyen de serrage (100), sur au moins un tiers de la longueur de la tige de fixation (212), de préférence sur au moins la moitié de ladite longueur.

3. Turbine (C) selon la revendication 2, comprenant un anneau d'étanchéité (60) fixé sur une face interne du tambour externe (50), l'anneau d'étanchéité (60) comprenant au moins un plot anti-rotation (62), le plot anti-rotation (62) étant engagé dans une encoche (211) de l'aubage mobile externe (20).

4. Turbine (C) selon la revendication 3, dans laquelle une lamelle de jonction (70) comprenant au moins un orifice (72) coaxial avec l'orifice (51) du tambour externe est intercalée entre la face interne du tambour externe (50) et l'aubage mobile externe (20).

5. Turbine (C) selon l'une quelconque des revendications 3 et 4, dans laquelle la tige de fixation (212) s'étend radialement depuis la base (210), la base (210) comprenant l'encoche (211).

6. Turbine (C) selon l'une quelconque des revendications 2 à 5, comprenant un moyen d'amortissement (110) configuré pour être inséré dans une cavité formée entre les bases (210) de deux aubes adjacentes.

7. Turbomachine (10) comprenant la turbine contrarotative (C) selon l'une quelconque des revendications précédentes.

8. Procédé d'assemblage d'un aubage mobile externe (20) d'une turbine contrarotative (C) selon l'une quelconque des revendications 1 à 6, **caractérisé en ce qu'**il comprend :
- l'insertion d'une tige de fixation (212) de l'aubage mobile externe (20) dans un orifice (51) du tambour externe (50) du rotor externe de la turbine,
- l'insertion de la bague de calage (80) autour de la tige de fixation (212), dans l'orifice (51), et
- la fixation de l'aubage mobile externe (20) au tambour externe (50) par l'intermédiaire d'un moyen de serrage (100) fixé à la tige de fixation (212) depuis une face externe du tambour externe (50).

9. Procédé selon la revendication 8, dans lequel, avant l'étape d'insertion de la tige de fixation (212), un anneau d'étanchéité (60), comprenant au moins un plot anti-rotation (62), est fixé sur une face interne du tambour externe (50), le plot anti-rotation (62) étant engagé dans une encoche (211) de l'aubage mobile externe (20) lors de l'étape d'insertion de la tige de fixation (212) dans l'orifice (51) dudit tambour externe (50).

10. Procédé selon l'une quelconque des revendications 8 et 9, dans lequel, avant l'étape de fixation du moyen de fixation (100) sur la tige de fixation (212), une rondelle d'étanchéité (90) est installée de manière à être intercalée entre la bague de calage (80) et le moyen de fixation (100).

## Patentansprüche

1. Gegenläufige Turbine (C) einer Turbomaschine (10), die sich um eine Achse (X) erstreckt und umfasst:
- einen Innenrotor, der ausgelegt ist, um um die Rotationsachse (X) zu drehen und eine interne Trommel umfasst, auf der eine innere laufende Beschaufelung (22) befestigt ist, die mindestens eine innere laufende Schaufel hat, die sich radial nach außen erstreckt,
- einen Außenrotor, der ausgelegt ist, um um die Rotationsachse (X) in einer Richtung entgegengesetzt zum Innenrotor zu drehen und eine äußere Trommel (50) umfasst, auf der eine äußere laufende Beschaufelung (20) befestigt ist, die mindestens eine äußere laufende Schaufel hat, die sich radial nach innen erstreckt,
**dadurch gekennzeichnet, dass** die äußere laufende Beschaufelung (20) mindestens eine Befestigungsstange (212) umfasst, die sich durch eine Öffnung (51) der äußeren Trommel (50) erstreckt, dass die äußere laufende Beschaufelung (20) an der äußeren Trommel (50) mittels eines Spannmittels (100) befestigt ist, das an der Befestigungsstange (212) ab einer Außenfläche der äußeren Trommel (50) befestigt ist und dass ein Stellring (80) um die Befestigungsstange (50) in der Öffnung (51) der äußeren Trommel (50) angeordnet ist.

2. Turbine (C) nach Anspruch 1, wobei sich der Stellring (80) entlang der Befestigungsstange (212) im Inneren der Öffnung (51) der äußeren Trommel (50) zwischen einer Basis (210) der äußeren laufenden Beschaufelung (20) und dem Spannmittel (100) über mindestens ein Drittel der Länge der Befestigungsstange (212), vorzugsweise mindestens die Hälfte der Länge erstreckt.

3. Turbine (C) nach Anspruch 2, umfassend einen Dichtring (60), der auf einer Innenfläche der äußeren Trommel (50) befestigt ist, wobei der Dichtring (60) mindestens einen Antirotationsstift (62) umfasst, wobei der Antirotationsstift (62) in eine Kerbe (211) der äußeren laufenden Beschaufelung (20) eingreift.

4. Turbine (C) nach Anspruch 3, wobei eine Verbindungslamelle (70), die mindestens eine mit der Öffnung (51) der äußeren Trommel koaxiale Öffnung (72) umfasst, zwischen der Innenfläche der äußeren Trommel (50) und der äußeren laufenden Beschaufelung (20) angeordnet ist.

5. Turbine (C) nach einem der Ansprüche 3 und 4, wobei sich die Befestigungsstange (212) radial ab der Basis (210) erstreckt, wobei die Basis (210) die Kerbe (211) umfasst.

6. Turbine (C) nach einem der Ansprüche 2 bis 5, umfassend ein Dämpfungsmittel (110), das ausgelegt ist, um in einen Hohlraum eingesetzt zu sein, der zwischen den Basen (210) von zwei benachbarten Schaufeln gebildet ist.

7. Turbomaschine (10), umfassend die gegenläufige Turbine (C) nach einem der vorangehenden Ansprüche.

8. Verfahren zur Montage einer äußeren laufenden Beschaufelung (20) einer gegenläufigen Turbine (C) nach einem der Ansprüche 1 bis 6, **dadurch gekennzeichnet, dass** es umfasst:
- Einsetzen einer Befestigungsstange (212) der äußeren laufenden Beschaufelung (20) in eine Öffnung (51) der äußeren Trommel (50) des Außenrotors der Turbine,
- Einsetzen des Stellrings (80) um die Befestigungsstange (212) in die Öffnung (51), und
- Befestigen der äußeren laufenden Beschaufelung (20) an der äußeren Trommel (50) mittels eines Spannmittels (100), das an der Befestigungsstange (212) ab einer Außenfläche der äußeren Trommel (50) befestigt ist.

9. Verfahren nach Anspruch 8, wobei vor dem Schritt des Einsetzens der Befestigungsstange (212) ein Dichtring (60), der mindestens einen Antirotationsstift (62) umfasst, auf einer Innenfläche der äußeren Trommel (50) befestigt ist, wobei der Antirotationsstift (62) beim Schritt des Einsetzens der Befestigungsstange (212) in die Öffnung (51) der äußeren Trommel (50) in eine Kerbe (211) der äußeren laufenden Beschaufelung (20) eingreift.

10. Verfahren nach einem der Ansprüche 8 und 9, wobei vor dem Schritt des Befestigens des Befestigungsmittels (100) an der Befestigungsstange (212) eine Dichtscheibe (90) derart angebracht wird, dass sie zwischen dem Stellring (80) und dem Befestigungsmittel (100) angeordnet ist.

## Claims

1. A counter-rotating turbine (C) of a turbomachine (10), extending about an axis (X) and comprising:
- an inner rotor configured to rotate about the axis of rotation (X), and comprising an inner drum on which is fixed an inner movable blading (22) having at least one inner movable blade extending radially outwardly,
- an outer rotor configured to rotate about the axis of rotation (X) in a direction opposite to the inner rotor, and comprising an outer drum (50) on which is fixed an outer movable blading (20) having at least one outer movable blade extending radially inwardly,
**characterized in that** the outer movable blading (20) comprises at least one fixing rod (212) extending through an orifice (51) of the outer drum (50), **in that** the outer movable blading (20) is fixed to the outer drum (50) via a clamping means (100) fixed to the fixing rod (212) from an outer face of the outer drum (50), and **in that** a set ring (80) is disposed around the fixing rod (50) in the orifice (51) of the outer drum (50).

2. The turbine (C) according to claim 1, wherein the set ring (80) extends along the fixing rod (212) inside the orifice (51) of the outer drum (50), between a base (210) of the outer movable blading (20) and the clamping means (100), on at least one third of the length of the fixing rod (212), preferably on at least half of said length.

3. The turbine (C) according to claim 2, comprising a sealing ring (60) fixed on an inner face of the outer drum (50), the sealing ring (60) comprising at least one anti-rotation stud (62), the anti-rotation stud (62) being engaged in a notch (211) of the outer movable blading (20).

4. The turbine (C) according to claim 3, wherein a junction strip (70) comprising at least one orifice (72) coaxial with the orifice (51) of the outer drum is interposed between the inner face of the outer drum (50) and the outer movable blading (20).

5. The turbine (C) according to any one of claims 3 and 4, wherein the fixing rod (212) extends radially from the base (210), the base (210) comprising the notch (211).

6. The turbine (C) according to any one of claims 2 to 5, comprising a damping means (110) configured to be inserted into a recess formed between the bases (210) of two adjacent blades.

7. A turbomachine (10) comprising the counter-rotating turbine (C) according to any one of the preceding claims.

8. A method for assembling an outer movable blading (20) of a counter-rotating turbine (C) according to any one of claims 1 to 6, **characterized in that** it comprises:
- the insertion of a fixing rod (212) of the outer movable blading (20) in an orifice (51) of the outer drum (50) of the outer rotor of the turbine,
- the insertion of the set ring (80) around the fixing rod (212), in the orifice (51), and
- the fixing of the outer movable blading (20) to the outer drum (50) via a clamping means (100) fixed to the fixing rod (212) from an outer face of the outer drum (50).

9. The method according to claim 8, wherein, prior to the step of inserting the fixing rod (212), a sealing ring (60), comprising at least one anti-rotation stud (62), is fixed on an inner face of the outer drum (50), the anti-rotation stud (62) being engaged in a notch (211) of the outer movable blading (20) during the step of inserting the fixing rod (212) in the orifice (51) of said outer drum (50).

10. The method according to any one of claims 8 and 9, wherein, prior to the step of fixing the fixing means (100) on the fixing rod (212), a sealing washer (90) is installed so as to be interposed between the set ring (80) and the fixing means (100).
